# EUROPEAN PATENT APPLICATION

(11) **EP 3 364 360 A1**
(43) Date of publication of application: **22.08.2018**
(21) Application number: 16855271.9
(22) Date of filing: 30.09.2016
(51) Int. Cl.: G06Q 30/02

(54) **INFORMATION-PROCESSING DEVICE AND INFORMATION-PROCESSING METHOD, WEARABLE TERMINAL, AND PROGRAM**

(30) Priority: 16.10.2015 JP 2015204759
(71) Applicant: Sony Corporation, Tokyo 108-0075 (JP)
(72) Inventor: TSUBOI Naoto, Tokyo 108-0075 (JP); KATSU Masanori, Tokyo 108-0075 (JP)
(74) Representative: MFG Patentanwälte Meyer-Wildhagen Meggle-Freund Gerhard PartG mbB
(86) International application number: PCT/JP2016/078975
(87) International publication number: WO 2017/065017

(57) **Abstract**

The present technology relates to information processing apparatus, information processing method, wearable terminal and program which enable history information of behavior of a customer regarding an item such as goods to be acquired and utilized in the real world as history of behavior of a user with respect to an item such as goods is analyzed and utilized on an EC site, or the like, on a web. An event such as a customer becoming interested in an item such as goods and taking the item in his/her hand is detected, and, if it is determined that the item is compared and considered among a plurality of items on the basis of the history information, the event is stored in a database as comparison behavior history. Information obtained by analyzing the comparison behavior history can be utilized in a goods sales supporting system, a decision-making supporting system at a store management side, or the like. The present technology can be applied to the goods sales supporting system.

## Description

### Technical Field

The present technology relates to an information processing apparatus, an information processing method, a wearable terminal, and a program, and, more particularly to an information processing apparatus, an information processing method, a wearable terminal, and a program which enable goods information to be provided to visit customers in real time at an actual store so that goods can be compared.

### Background Art

So-called Internet shopping in which trading is performed by, after procedure of purchasing goods on the Internet being performed, the goods being delivered via parcel delivery service, or the like, is commonly performed.

In the Internet shopping in recent years, a technology has been proposed which enables goods to be easily compared and purchased by related goods being displayed as comparison targets when one item of goods is searched for (see Patent Literature 1).

### Citation List

### Patent Literature

Patent Literature 1: JP 2002-63132A

### Disclosure of Invention

### Technical Problem

By the way, in the technology of Patent Literature 1, information of user's behavior such as browsing and purchasing can be acquired as electronic data, and the information of user's behavior can be obtained by analyzing the electric data.

However, in a situation where a customer is considering purchasing goods at an actual store, it is difficult to acquire information of customer behavior, and, previously, there has been no information of history of customer behavior, particularly, concerning comparison and considering among a plurality of goods on the spot.

The present technology has been made in view of such circumstances, and is particularly directed to enabling comparison log information when customers consider purchasing goods to be acquired at an actual store, and enabling an analyzed result to be used for information and recommendation to customers or to be used as reference information for decision-making at the store side.

### Solution to Problem

According to one aspect of the present technology, an information processing apparatus includes: an item detecting unit configured to detect an item which a user becomes interested in as a target item; a behavior detecting unit configured to detect behavior of the user with respect to the target item; a comparison item searching unit configured to search for an item to be compared with the target item as a comparison item on a basis of the behavior of the user detected by the behavior detecting unit; and a presenting unit configured to present information relating to the comparison item searched for by the comparison item searching unit and information relating to the target item.

The behavior detecting unit may detect time-series behavior of the user with respect to the target item.

The item may be goods displayed on a store shelf of a store. The information processing apparatus may further include an imaging unit configured to capture an image of a circumference of the store shelf. The item detecting unit may detect the goods which the user becomes interested in as target goods which are the target item, when it is detected that the user takes the goods in his/her hand on a basis of the image captured by the imaging unit.

The behavior detecting unit may detect the time-series behavior of the user with respect to the target item by detecting behavior of the user who takes the target goods in his/her hand in chronological order. The information processing apparatus may further include a storage unit configured to store the detected time-series behavior as a behavior log.

The behavior detecting unit may cause behavior only associated with purchasing of goods among the detected time-series behavior to be stored in the storage unit as the behavior log.

The comparison item searching unit may search for target goods which are the target item satisfying a behavior condition to be compared with target goods, as comparison goods which are the comparison item on a basis of the time-series behavior of the user detected by the behavior detecting unit.

The target item detecting unit may further search for goods information of the target goods which are the target item. The comparison item searching unit may further search for goods information of the comparison goods which are the comparison item. The information processing apparatus may further include a presentation information generating unit configured to process the goods information of the target goods and the comparison goods to generate presentation information which is information capable of being presented by the presenting unit.

The information processing apparatus may further include a goods acquiring unit configured to detect that the goods are taken in a hand from the store shelf. The item detecting unit may detect that the user takes the goods in his/her hand on a basis of the image captured by the imaging unit, and, when it is detected by the goods acquiring unit that the goods are taken in the hand of the user, detects the goods which the user becomes interested in as the target goods which are the target item.

The goods acquiring unit may include a weight sensor configured to detect whether or not the user takes goods put on the store shelf in his/her hand by measuring weight of the store shelf, an infrared sensor configured to perform detection in accordance with whether or not infrared light is blocked by the goods, or a conduction sensor configured to detect change of conduction in accordance with presence or absence of the goods.

The item may be goods displayed on a store shelf of a store. The information processing apparatus may further include a wearable terminal configured to be worn on an arm of the user and configured to detect location information and acceleration information. The item detecting unit may detect the goods which the user becomes interested in as target goods which are the target item, when it is detected that the user takes the goods in his/her hand on a basis of the location information and the acceleration information detected by the wearable terminal.

The wearable terminal may be worn on the arm of the user, detect location information and acceleration information, and include an imaging unit configured to capture an image. The item detecting unit may detect the goods which the user becomes interested in as the target goods which are the target item, when it is detected that the user takes the goods in his/her hand on a basis of the location information and the acceleration information detected by the wearable terminal and the image captured by the imaging unit.

The behavior detecting unit may detect time-series behavior of the user with respect to the target item by detecting behavior of the user who takes the target goods in his/her hand in chronological order. The information processing apparatus may further include a storage unit configured to store the detected time-series behavior as a behavior log.

The behavior detecting unit may cause behavior only associated with purchasing of goods among the detected time-series behavior to be stored in the storage unit as the behavior log.

The comparison item searching unit may search for target goods which are the target item satisfying a behavior condition to be compared with target goods, as comparison goods which are the comparison item on a basis of the time-series behavior of the user detected by the behavior detecting unit.

The target item detecting unit may further search for goods information of target goods which are the target item. The comparison item searching unit may further search for goods information of comparison goods which are the comparison item. The information processing apparatus may further include a presentation information generating unit configured to process the goods information of the target goods and the comparison goods to generate presentation information capable of being presented by the presenting unit.

According to one aspect of the present technology, an information processing method includes steps of: detecting an item which a user becomes interested in as a target item; detecting behavior of the user with respect to the target item; searching for an item to be compared with the target item as a comparison item on a basis of the detected behavior of the user; and presenting information relating to the searched comparison item and information relating to the target item.

According to one aspect of the present technology, a program causes a computer to function as: an item detecting unit configured to detect an item which a user becomes interested in as a target item; a behavior detecting unit configured to detect behavior of the user with respect to the target item; a comparison item searching unit configured to search for an item to be compared with the target item as a comparison item on a basis of the behavior of the user detected by the behavior detecting unit; and a presenting unit configured to present information relating to the comparison item searched for by the comparison item searching unit and information relating to the target item.

According to one aspect of the present technology, a wearable terminal includes: an item detecting unit configured to detect an item which a user becomes interested in as a target item; a behavior detecting unit configured to detect behavior of the user with respect to the target item; a comparison item searching unit configured to search for an item to be compared with the target item as a comparison item on a basis of the behavior of the user detected by the behavior detecting unit; and a presenting unit configured to present information relating to the comparison item searched for by the comparison item searching unit and information relating to the target item.

According to one aspect of the present technology, an item which a user becomes interested in is detected as a target item; behavior of the user with respect to the target item is detected; an item to be compared with the target item is searched for as a comparison item on a basis of the detected behavior of the user; and information relating to the searched comparison item and information relating to the target item are presented.

An information processing apparatus and a wearable terminal according to one aspect of the present technology may be respectively independent apparatuses or may be blocks which function as the information processing apparatus and the wearable terminal.

### Advantageous Effects of Invention

According to one aspect of the present technology, it is possible to provide goods information to visit customers in real time at an actual store so that goods can be compared.

### Brief Description of Drawings

[FIG. 1] FIG. 1 is a diagram explaining a configuration example of a first embodiment of a goods sales supporting system including a cloud server and a store apparatus to which the present technology is applied.
[FIG. 2] FIG. 2 is a diagram explaining a connection state of respective components within a store in FIG. 1
[FIG. 3] FIG. 3 is a diagram explaining a configuration example of the cloud server in FIG. 1.
[FIG. 4] FIG. 4 is a diagram explaining operation of a comparison goods searching unit in FIG. 1.
[FIG. 5] FIG. 5 is a flowchart explaining goods sales supporting processing in FIG. 1.
[FIG. 6] FIG. 6 is a flowchart explaining comparison goods search processing in FIG. 5.
[FIG. 7] FIG. 7 is a diagram explaining a first modified example of a comparison goods searching unit in FIG. 3.
[FIG. 8] FIG. 8 is a diagram explaining operation of the comparison goods searching unit in FIG. 7.
[FIG. 9] FIG. 9 is a flowchart explaining comparison goods search processing by the comparison goods searching unit in FIG. 7.
[FIG. 10] FIG. 10 is a diagram explaining a second modified example of the comparison goods searching unit in FIG. 3.
[FIG. 11] FIG. 11 is a diagram explaining operation of the comparison goods searching unit in FIG. 10.
[FIG. 12] FIG. 12 is a flowchart explaining comparison goods search processing by the comparison goods searching unit in FIG. 10
[FIG. 13] FIG. 13 is a diagram explaining a configuration example of a second embodiment of the goods sales supporting system including the cloud server and the store apparatus to which the present technology is applied.
[FIG. 14] FIG. 14 is a diagram explaining outline of a wearable terminal.
[FIG. 15] FIG. 15 is a diagram explaining functions of the wearable terminal.
[FIG. 16] FIG. 16 is a diagram explaining a configuration example of the cloud server in FIG. 13.
[FIG. 17] FIG. 17 is a flowchart explaining goods sales supporting processing in the goods sales supporting system in FIG. 13.
[FIG. 18] FIG. 18 is a diagram explaining a configuration example of a third embodiment of the goods sales supporting system including the cloud server and the store apparatus to which the present technology is applied.
[FIG. 19] FIG. 19 is a flowchart explaining goods sales supporting processing in the goods sales supporting system in FIG. 18.

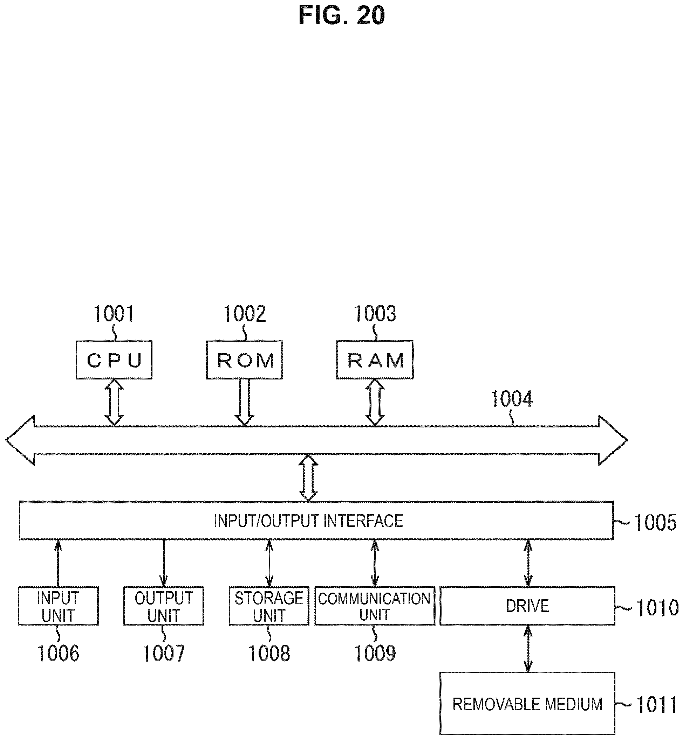

[FIG. 20] FIG. 20 is a diagram explaining a configuration example of a general-purpose personal computer.

### Mode(s) for Carrying Out the Invention

### <First embodiment>

### <Configuration example of first embodiment of goods sales supporting system>

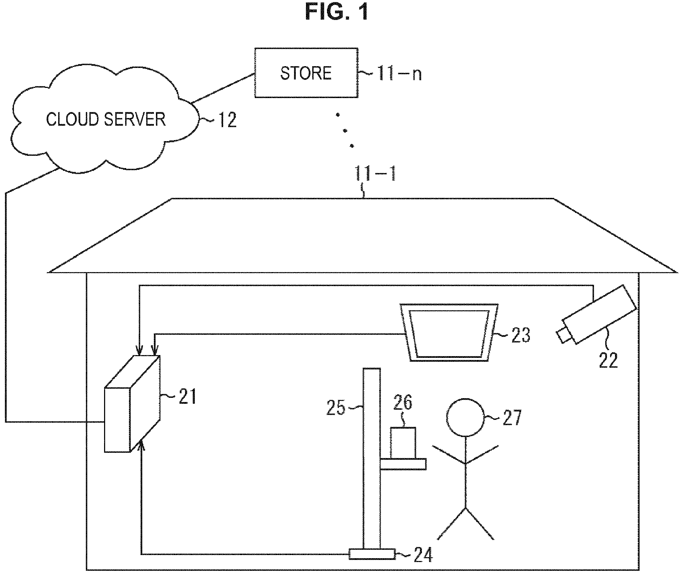

FIG. 1 illustrates a configuration example of a first embodiment of a goods sales supporting system to which the present technology is applied. The goods sales supporting system in FIG. 1 is configured with a plurality of stores 11-1 to 11-n and a cloud server 12 connected by the plurality of stores 11-1 to 11-n. Note that, in the following description, in the case where it is not necessary to particularly distinguish among the stores 11-1 to 11-n, the plurality of stores 11-1 to 11-n will be simply referred to as a store 11, and other components will be also referred to in a similar manner.

The store 11 includes a communication unit 21 which communicates with the cloud server 12, an imaging unit 22 which captures an image inside the store 11, a presenting unit 23 which presents an image transmitted from the cloud server 12 and which is configured with, for example, a display, or the like, and a weight sensor 24 which measures change of weight of a store shelf 25 on which goods 26 are displayed.

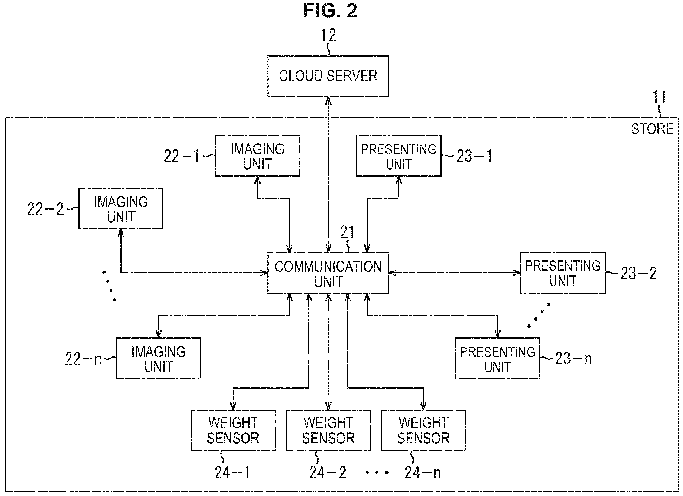

For example, as illustrated in FIG. 2, a plurality of imaging units 22-1 to 22-n, presenting units 23-1 to 23-n and weight sensors 24-1 to 24-n are respectively provided in the store 11 so as to cover the whole range where the store shelf 25 is provided inside the store 11. Each of the plurality of imaging units 22-1 to 22-n, presenting units 23-1 to 23-n and weight sensors 24-1 to 24-n communicates with the cloud server 12 via the communication unit 21.

The imaging unit 22 is set at an angle so as to be able to capture an image of behavior of a visit customer 27 who takes goods 26 displayed on the store shelf 25 in his/her hand in detail, and transmits the captured image to the cloud server 12 via the communication unit 21. Note that the imaging unit 22 may include a function of changing a direction in which an image is captured or a so-called pan-tilt-zoom function such as a telescopic function as necessary.

The presenting unit 23 acquires an image transmitted from the cloud server 12 via the communication unit 21 and presents (displays) the image on the basis of the image captured by the imaging unit 22.

The weight sensor 24 measures weight on the store shelf 25 and transmits a measurement result of the weight to the cloud server 12 as information from which whether or not the goods 26 are picked up by the visit customer 27 can be appropriately recognized from the change.

The cloud server 12 identifies the visit customer on the basis of the image transmitted from the imaging unit 22 of each store 11, records information as to which goods are taken by each of the visit customers in his/her hand at which timing in chronological order, generates an image including goods information required for each visit customer on the basis of the information and transmits the image so as to be presented at the presenting unit 23 of the store 11.

In this manner, the goods sales supporting system, as a whole, captures an image of behavior of the visit customer at each location in the store 11, records imaging results in chronological order, generates an image including goods information relating to comparison goods of goods taken in his/her hand on the basis of the information recorded in chronological order as information required for goods sales support and causes the image to be presented at the presenting unit 23.

According to these series of operation, because, only by the visit customer 27 taking goods 26 in which the visit customer 27 becomes interested in his/her hand, comparison goods required for purchasing the goods 26 are presented at the presenting unit 23 in the vicinity, it is possible to support goods sales.

### <Configuration example of cloud server>

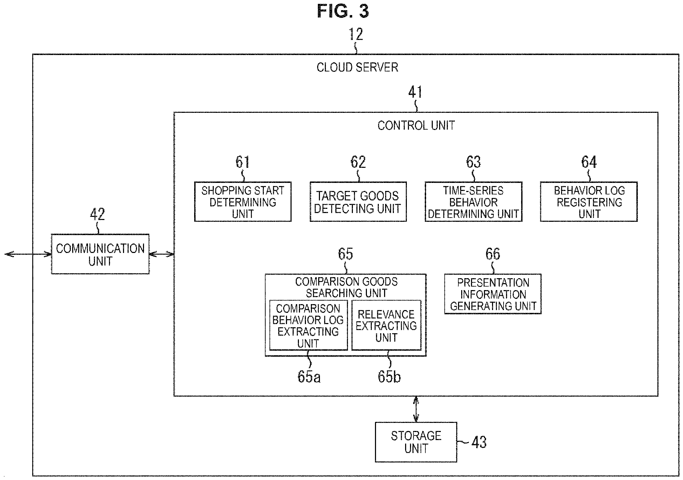

More specifically, the cloud server 12 is, for example, a server which is realized by a plurality of computers, and which is realized by cloud computing in which one function is processed by being shared among a plurality of apparatuses and by the plurality of apparatuses collaborating via a network. As illustrated in FIG. 3, the cloud server 12 includes a control unit 41, a communication unit 42 and a storage unit 43. Note that FIG. 3 schematically illustrates functions of the cloud server 12 realized by cloud computing.

The control unit 41 controls the whole operation of the cloud server 12. The communication unit 42, which is controlled by the control unit 41, communicates with the communication unit 21 of the store 11 via a network. The storage unit 43, which is configured with a hard disc drive (HDD), a solid state drive (SSD), or the like, stores data and a program required for the control unit 41 to operate. Further, the storage unit 43 stores goods information including a category of the goods 26 which will be described later, brand of the goods, a barcode, weight, or the like, in advance, which is to be utilized when corresponding goods are specified from a captured image, weight information, or the like. Further, the storage unit 43 stores data and a database required for the control unit 41 to execute various kinds of programs.

More specifically, the control unit 41 includes a shopping start determining unit 61, a target goods detecting unit 62, a time-series behavior determining unit 63, a behavior log registering unit 64, a comparison goods searching unit 65 and a presentation information generating unit 66.

The shopping start determining unit 61 determines whether or not the visit customer 27 starts shopping from image information including an image captured by the imaging unit 22, and weight information including information of change in weight of the store shelf 25 measured by the weight sensor 24. In this event, the shopping start determining unit 61 causes the image information and the weight information to be sequentially stored in the storage unit 43 as a log. The shopping start determining unit 61 regards change corresponding to weight of the goods 26 occurred by the visit customer 27 touching the goods 26 and further lifting the goods 26 from the store shelf 25, as starting of shopping, for example, on the basis of the image information and the weight information.

The target goods detecting unit 62 searches for goods 26 which become targets, that is, target goods on the basis of the image information when shopping is started.

The time-series behavior determining unit 63 determines behavior of the visit customer 27 in chronological order on the basis of the image information and the weight information. The time-series behavior of the visit customer 27 described here includes, for example, one type of behavior at a predetermined moment such as simple behavior of taking goods C in his/her hand, as well as a series of a plurality of types of behavior in association with elapse of time during visit of the store, for example, after taking goods A in his/her hand, returning the goods A to the shelf, and, then, taking goods B in his/her hand, from when the visit customer 27 visits the store until when the visit customer 27 leaves the store. Further, the time-series behavior of the visit customer 27 includes behavior which is not limited to a series of types of behavior from when the visit customer 27 visits the store until when the visit customer 27 leaves the store, such as behavior of always taking the same goods D when the visit customer 27 visits the store even on different dates of visit.

The behavior log registering unit 64 causes behavior determined by the time-series behavior determining unit 63 and time at which the behavior occurs to be stored in the storage unit 43 as a behavior log.

The comparison goods searching unit 65 searches for comparison goods on the basis of a comparison behavior log which is time-series behavior with respect to target goods among the behavior logs stored and accumulated in the storage unit 43. That is, in the case where, for example, two items of target goods are taken in his/her hand at the same time among the behavior logs of the same visit customer 27, the comparison goods searching unit 65 sets an item of goods taken in his/her hand at a later timing as comparison goods with respect to an item of goods taken in his/her hand first, and recognized as target goods first.

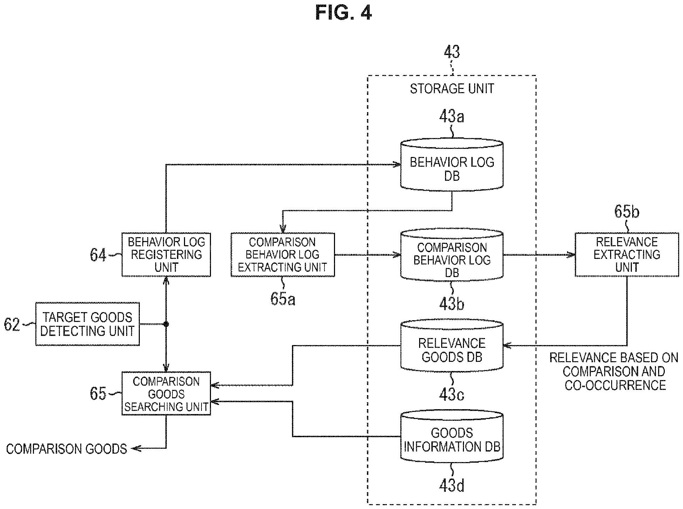

In more detail, the comparison goods searching unit 65 includes a comparison behavior log extracting unit 65a and a relevance extracting unit 65b. For example, as illustrated in FIG. 4, the comparison behavior log extracting unit 65a extracts only a comparison behavior log relating to comparison behavior which is behavior when goods are compared from a behavior log database (DB) 43a in which behavior logs are accumulated and generates a comparison behavior log DB 43b. Here, the behavior log DB 43a is a database of behavior logs registered by the behavior log registering unit 64.

The relevance extracting unit 65b extracts goods relevant on the basis of comparison and co-occurrence among comparison behavior logs accumulated in the comparison behavior log DB 43b as relevant goods and registers information of the relevant goods in a relevant goods DB 43c.

As the relevant goods relevant on the basis of comparison and co-occurrence described here, for example, in the case where there is behavior of taking goods A in his/her hand as a purchasing candidate, goods B which are also taken in his/her hand as a purchasing candidate before or after the behavior become relevant goods relevant on the basis of comparison and co-occurrence of the goods A. That is, concerning action of taking a candidate of goods to be purchased in his/her hand, when a number of people who take goods A in their hands which are current target goods take goods B before or after taking the goods A, the relevant goods relevant on the basis of comparison and co-occurrence of the goods A are goods B.

There are a number of types of behavior which can be considered as comparison and co-occurrence other than this, for example, including behavior of many of people who take goods A which are current target goods in their hands staying around a shelf on which the goods B are displayed for equal to or longer than a predetermined time period before or after taking the goods A in their hands, behavior of many of people who takes the goods A which are current target goods in their hands purchasing the goods B, or the like. In any of the above-described behavior, the goods B become relevant goods which are relevant on the basis of comparison and co-occurrence of the goods A when the goods A are target goods. The relevance extracting unit 65b extracts relevant goods which are relevant on the basis of comparison and co-occurrence of the goods A with respect to these various types of possible behavior.

The comparison goods searching unit 65 reads out goods registered in the relevant goods 43c as comparison goods of the target goods, reads out individual goods information of the corresponding comparison goods from a goods information DB 43d and outputs the comparison goods and the goods information.

The presentation information generating unit 66 generates a presentation image for presenting goods information of the target goods and the comparison goods at the presenting unit 23, as presentation information.

### <Goods sales supporting processing in goods sales supporting system in FIG. 1>

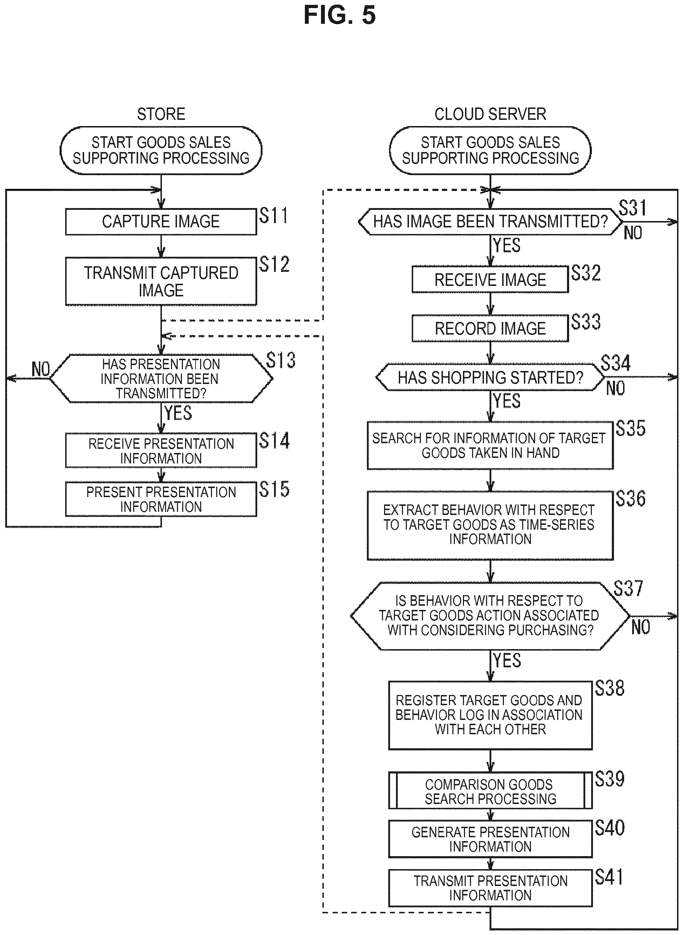

Goods sales supporting processing in the goods sales supporting system in FIG. 1 will be described next with reference to the flowchart in FIG. 5.

In step S11, the imaging unit 22 of the store 11 captures an image in a monitoring area and outputs the image to the communication unit 21 as image information. In this event, the image information includes identification information for individually identifying the imaging unit 22, and it is possible to recognize that which imaging unit 22 captures the image on the basis of this identification information.

In step S12, the communication unit 21 transmits the image information to the cloud server 12.

In step S31, the control unit 41 controls the communication unit 42 to determine whether or not image information has been transmitted from the store 11, and, in the case where it is regarded that image information has not been transmitted, the processing repeats processing in step S31. Then, in step S31, in the case where image information has been transmitted from the store 11, the processing proceeds to step S32.

In step S32, the control unit 41 receives the transmitted image information and weight information.

In step S33, the control unit 41 causes the transmitted image information and weight information to be stored in the storage unit 43 along with receipt time in association with information for identifying the imaging unit 22.

In step S34, the control unit 41 controls the shopping start determining unit 61 to determine whether or not shopping of goods has been started on the basis of the image information and the weight information. In step S34, for example, if it is recognized that weight changes by the visit customer 27 touching the goods 26 with his/her hand and further lifting the goods 26 from the store shelf 25 on the basis of the image information and the weight information, the shopping start determining unit 61 regards it as start of shopping, and the processing proceeds to step S35. Note that, in the case where it is regarded that shopping has not been started in step S34, the processing returns to step S31.

In step S35, the target goods detecting unit 62 regards the goods 26 which are taken in his/her hand by the visit customer 27 as the target goods, and searches for goods information of the target goods. More specifically, for example, by arrangement for each type of goods being stored in advance in accordance with positions on the store shelf 25 on which the goods 26 appearing in the image in the image information are displayed, the target goods detecting unit 62 may specify a type of the target goods and detect the goods information. Further, in the case where the image information has high resolution, for example, the target goods detecting unit 62 may read out a label on which goods name is described, a barcode, or the like, to detect goods information of the target goods. Still further, the target goods detecting unit 62 may utilize goods information stored in the relevant goods DB 43c stored in the storage unit 43.

In step S36, the time-series behavior determining unit 63 determines and extracts behavior of the visit customer 27 in chronological order on the basis of the image information and the weight information and supplies the behavior to the behavior log registering unit 64. For example, the time-series behavior determining unit 63 determines each type of time-series behavior of the visit customer 27 touching the goods 26 with his/her right hand within the image, and, after a predetermined time period has elapsed, lifting the goods 26 from the store shelf 25 on the basis of the weight information, and, after a predetermined time period has elapsed, shifting the goods 26 to the left hand, and further after a predetermined time period has elapsed, returning the goods 25 to the store shelf 25, and supplies the determination result and time in association with each other to the behavior log registering unit 64 as the behavior log. Note that the time-series behavior is not limited to such a plurality of types of behavior, but may be simply only behavior of taking the goods in his/her hand, behavior which is repeated every time the visit customer visits the store, or the like.

In step S37, the behavior log registering unit 64 determines whether behavior with respect to the target goods is action associated with considering purchasing. That is, for example, behavior of the visit customer 27 taking the goods 26 with his/her hand and returning the goods 26 to the original position in a very short period of time is not regarded as action associated with considering purchasing. Further, in the case where there are another goods in front of goods which the visit customer originally desires to consider purchasing, behavior of temporarily taking the other goods in front of the goods to move to take the goods which the visit customer desires to consider purchasing with his/her hand is not behavior of considering purchasing, and thus, not regarded as action associated with considering purchasing.

Meanwhile, in the case where the target goods are continuously grasped for equal to or longer than a predetermined time period, or behavior of shifting the goods to/from the right or left hand is repeated, such behavior is regarded as action associated with considering purchasing.

Then, when behavior with respect to the target goods is regarded as action associated with considering purchasing in step S37, in step S38, the behavior log registering unit 64 causes information of the behavior extracted in chronological order to be stored in the storage unit 43 as the behavior log DB 43a. Note that, in step S37, in the case where the behavior with respect to the target goods is not regarded as action associated with considering purchasing, the processing returns to step S31.

In step S39, the comparison goods searching unit 65 executes comparison goods search processing and searches for goods information of the comparison goods with respect to the target goods by utilizing information of the behavior log DB 43a.

### <Comparison goods search processing in FIG. 5>

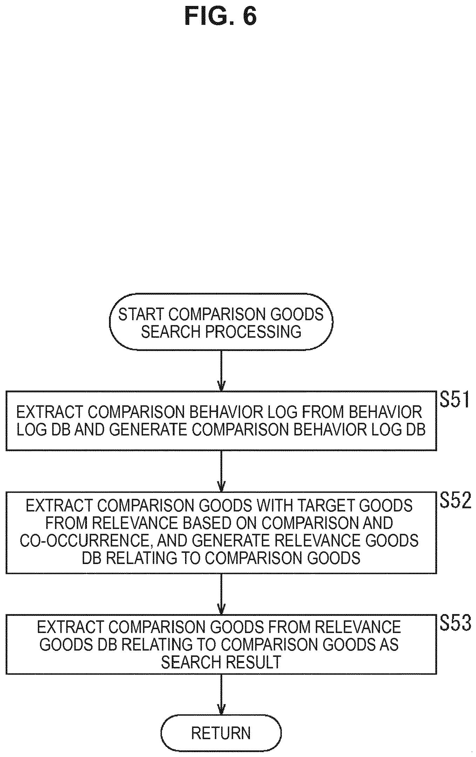

Here, the comparison goods search processing will be described with reference to the flowchart in FIG. 6.

In step S51, the comparison behavior log extracting unit 65a extracts a comparison behavior log which is made behavior when the target goods are compared, from the behavior log DB 43a (FIG. 4) and registers the comparison behavior log in the comparison behavior log DB 43b.

In step S52, the relevance extracting unit 65b extracts comparison goods with respect to the target goods from relevance based on comparison and co-occurrence and registers the comparison goods in the relevance goods DB 43c.

That is, the relevance extracting unit 65b searches for goods which are relevant on the basis of comparison and co-occurrence as the comparison goods from the comparison behavior logs with respect to the current target goods with reference to the comparison behavior log DB 43b. More specifically, for example, when the goods are taken in his/her hand at a timing a predetermined time period before or after a timing at which the target goods registered in the comparison behavior log DB 43b are taken in his/her hand, and behavior of taking the goods in his/her hand is regarded as comparison and co-occurrence because a duration while the goods are takin in his/her hand is long enough, the relevance extracting unit 65b searches for goods for which similar behavior has been performed as comparison goods with respect to the target goods.

Note that comparison and co-occurrence to be searched for as the comparison behavior log by the relevance extracting unit 65b is not limited to a case where a duration while the goods are taken in his/her hand is long enough, and, for example, may be judged by whether or not one or all of conditions or conditions of any combination are satisfied, the conditions including whether or not the target goods and goods in the comparison behavior log to be compared belong to the same category or are sufficiently similar, whether or not time at which the target goods are taken in his/her hand is closer to time at which the goods in the comparison behavior log are taken in his/her hand, whether or not action of taking the target goods in his/her hand and action of taking the goods in the comparison behavior log in his/her hand alternately repeatedly occur, whether or not the target goods and the goods in the comparison behavior log are taken in his/her hand at the same time, whether the target goods and the goods in the comparison behavior log are taken in his/her hand and viewed while the visit customer stops, and whether or not one of the target goods and the goods in the comparison behavior log is finally put and the other is held.

Further, it is also possible to make it easier to understand that goods with a higher score are more appropriate for comparison with the target goods by setting a score indicating that the goods are more appropriate for comparison using the number or a ratio of met conditions among these plurality of conditions, and, for example, it is also possible to perform setting such that only goods with a score higher than a predetermined value indicating that the goods are appropriate for comparison are to be searched for as the comparison goods.

Further, in the case where there is a comparison behavior log that after the goods A are taken in his/her hand, the goods B are taken in his/her hand at the same time, and, thereafter, there is a comparison behavior log that the goods C are taken in his/her hand as target goods, and the goods B are taken in his/her hand at the same time, the goods A as well as the goods B may be searched for as comparison goods with respect to the goods C.

In step S53, the comparison goods searching unit 65 extracts goods registered in the relevant goods DB 43c as the comparison goods, and reads out goods information corresponding to the goods extracted as the comparison goods from the goods information DB 43d.

According to the above-described processing, it is possible to search for the comparison goods as goods which are relevant on the basis of comparison and co-occurrence in the comparison behavior log relating to the target goods, and extract the searched comparison goods and the goods information thereof.

Here, description will be returned to description of the flowchart in FIG. 5.

In step S40, the presentation information generating unit 66 generates presentation information which can be presented at the presenting unit 23 on the basis of respective goods information of the target goods and the comparison goods.

In step S41, the control unit 41 controls the communication unit 42 to transmit the generated presentation information to the store 11.

In step S13, the communication unit 21 of the store 11 determines whether or not the presentation information is transmitted from the cloud server 12, and, in the case where it is regarded that the presentation information is not transmitted, the processing returns to step S11. On the other hand, in the case where the presentation information is transmitted in step S13, the processing proceeds to step S14.

In step S14, the communication unit 21 receives the presentation information transmitted from the cloud server 12.

In step S15, the communication unit 21 supplies the received presentation information to a predetermined presenting unit 23 and causes the presentation information to be presented.

According to these series of processing, the visit customer 27 can acquire goods information of goods which are taken in his/her hand and which are recognized as the target goods and can acquire goods information of the comparison goods at the presenting unit 23 provided in the vicinity only by taking the goods 26 in his/her hand from the store shelf 25.

As a result, it is possible to acquire goods information of the comparison goods as well as goods information of the target goods, which could be obtained only in shopping on a network previously.

Further, according to the processing in step S34, only behavior of a segment specified by a prefilter indicating start of shopping is registered as a log so that only specific behavior associated with purchase of goods is recorded as a log.

Still further, according to the processing in step S37, among information registered as behavior logs, only information associated with purchase of goods is recorded as a behavior log in the behavior log DB 43a of the storage unit 43.

In any case, as a result, it is possible to prevent registration of an unnecessary behavior log upon purchase of goods, so that it is possible to improve search accuracy and search speed of comparison goods.

Note that, while the behavior log in the above-described embodiment is a log in which time-series behavior determined by the time-series behavior determining unit 63 and time associated with process of the behavior are recorded, in other words, this can be regarded as history of behavior of the visit customer 27. Therefore, the comparison goods can be regarded as goods obtained on the basis of a result of processing static data such as a behavior log (history of behavior of the visit customer), such as a score indicating goods which are appropriate for comparison.

Further, while an example has been described above where it is determined whether or not the goods 26 are taken in the hand of the visit customer 27 on the basis of the weight information measured by the weight sensor 24, whether or not the goods 26 are acquired such as whether or not the visit customer 27 takes the goods 26 in his/her hand may be detected using a method other than this method, and, for example, whether or not the goods are taken in his/her hand may be detected with an infrared sensor or may be detected using a conduction sensor, or the like.

While, in the above-described processing, it can be said that the comparison goods are extracted through collaborative filtering, other filtering methods may be further used in conjunction with the collaborative filtering.

Further, the behavior log DB 43a or comparison behavior log DB 43b generated by the above-described series of processing can be also utilized in other application, and, for example may be applied to marketing. As a more specific example, by simple frequency and average in the behavior log DB 43a, attribute, cross tabulation with context, time-series change, an item (goods), correlation among item (goods) groups, correlation with various kinds of marketing activities, comparison for each brand, entire trend, or the like, being expressed as scores, for example, it is also possible to obtain a degree of interest with respect to an item (goods).

Further, the behavior log DB 43a or the comparison behavior log DB 43b can be also utilized in various kinds of clustering.

Further, as a comparison behavior result between a first item (goods) and a second item (goods) by utilizing the behavior log DB 43a or the comparison behavior log DB 43b, it is possible to obtain whether or not there is tendency of purchasing one or both, whether or not there is tendency of not purchasing after wavering, or the like, depending on whether or not the item is selected as a result of, for example, comparison. In this event, it is also possible to obtain further detailed tendency such as tendency for each user attribute, for each context and for each location or store.

Further, while an example has been described above where the comparison goods are searched for using the comparison behavior log, it is also possible to search for goods such as, for example, goods similar to the target goods and goods which are used along with the target goods, using a similar method using the behavior log and the comparison behavior log.

### <First modified example>

While an example has been described above where the comparison goods are searched for using the comparison behavior log, it is also possible to further extract information of preference of the visit customer 27 from the behavior log and search for the comparison goods while taking into account the preference along with the comparison behavior log.

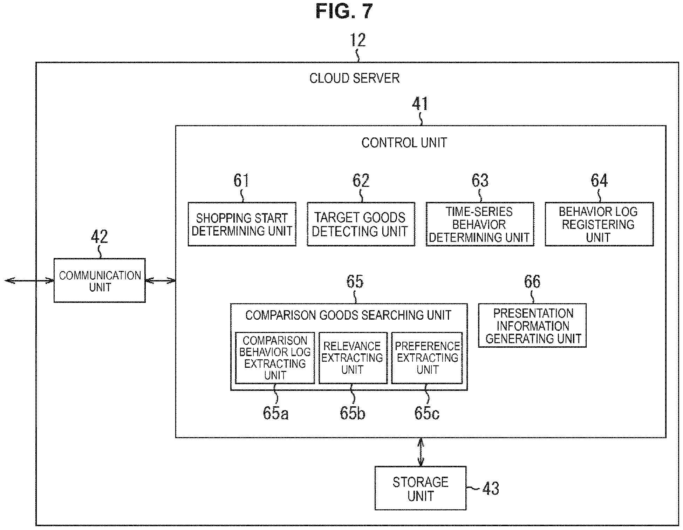

FIG. 7 is a configuration example of the cloud server 12 which is configured to search for the comparison goods while, in addition to the comparison behavior log, preference is also taken into account. Note that, in the configuration of the cloud server 12 in FIG. 7, the same reference numerals and the same name are assigned to components having the same functions as components in the cloud server 12 in FIG. 3, and description thereof will be omitted as appropriate.

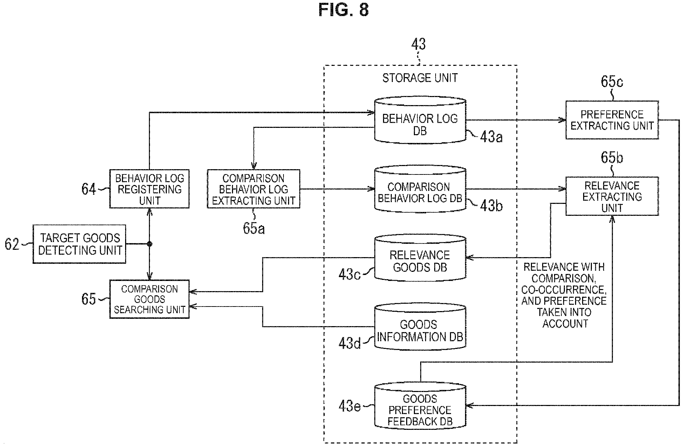

That is, the configuration of the cloud server 12 in FIG. 7 differs from the configuration of the cloud server 12 in FIG. 3 in that the comparison goods searching unit 65 further includes a preference extracting unit 65c in addition to the comparison behavior log extracting unit 65a and the relevance extracting unit 65b, and, further, as illustrated in FIG. 8, a goods preference feedback DB 43e is provided within the storage unit 43.

That is, as illustrated in FIG. 8, the preference extracting unit 65c reads out a behavior log from the behavior log DB 43a, extracts preference of the visit customer 27 and causes information of the extracted preference to be accumulated in the goods preference feedback DB 43e within the storage unit 43.

In this case, the relevance extracting unit 65b extracts goods on the basis of relevance while comparison and co-occurrence of the comparison behavior log and preference are taken into account, and registers the extraction result in the relevance goods DB 43c as the search result of the comparison goods.

Note that, preference described here indicates preference with respect to goods. For example, in the case where the target goods are goods A, when there is a behavior log indicating that goods B and goods C belonging to a category X of the goods A have been taken in his/her hand previously, it is estimated that preference of the visit customer 27 is goods belonging to the category X. Therefore, it is possible to further narrow down goods to goods belonging to the category X using the preference of the visit customer 27 among the goods extracted on the basis of the comparison behavior log.

### <Comparison goods search processing using cloud server in FIG. 7>

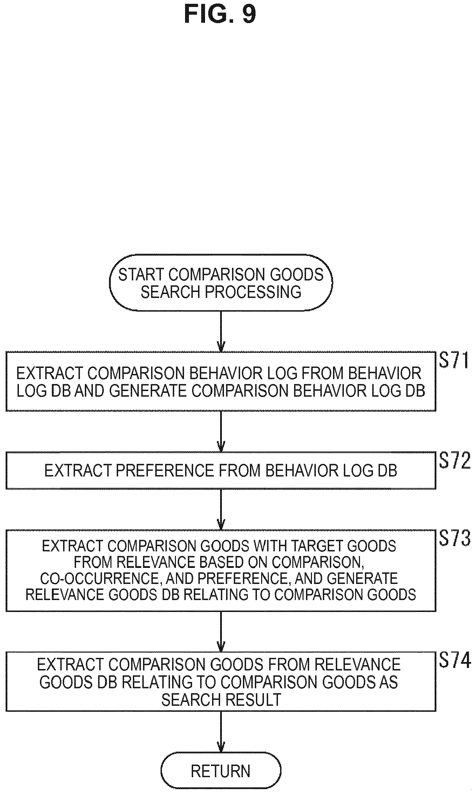

Comparison goods search processing using the cloud server 12 in FIG. 7 will be described here with reference to the flowchart in FIG. 9.

In step S71, the comparison behavior log extracting unit 65a extracts a comparison behavior log which is made behavior when the target goods are compared, from the behavior log DB 43a (FIG. 4) and registers the comparison behavior log in the comparison behavior log DB 43b.

In step S72, the preference extracting unit 65c extracts information of preference with respect to the goods from the behavior log DB 43a and causes the information to be accumulated in the goods preference feedback DB 43e.

In step S73, the relevance extracting unit 65b extracts the comparison goods with respect to the target goods from relevance based on comparison and co-occurrence and preference and registers the comparison goods in the relevance goods DB 43c. In more detail, the relevance extracting unit 65b, for example, extracts comparison goods with respect to the target goods from relevance based on comparison and co-occurrence and, further, registers goods narrowed down using the information of the preference accumulated in the goods preference feedback DB 43e among the extracted comparison goods in the relevance goods DB 43c.

In step S74, the comparison goods searching unit 65 extracts goods registered in the relevant goods DB 43c as the comparison goods, and reads out goods information corresponding to the goods extracted as the comparison goods from the goods information DB 43d.

According to the above-described processing, it is possible to search for the comparison goods as goods which are relevant on the basis of comparison, co-occurrence, and preference in the comparison behavior log relating to the target goods, and extract the searched comparison goods and the goods information thereof.

### <Second modified example>

While an example has been described above where the comparison goods are searched for using the comparison behavior log and the preference, it is also possible to extract context using the behavior log and search for the comparison goods using the comparison behavior log and the context.

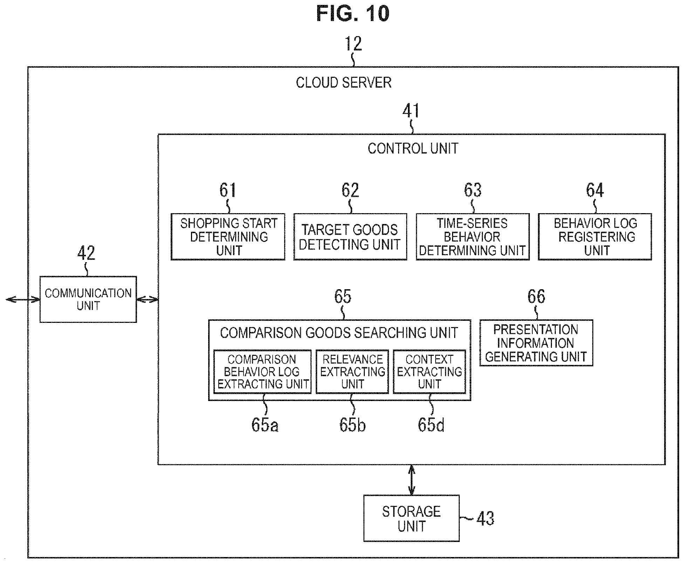

FIG. 10 is a configuration example of the cloud server 12 which is configured to search for the comparison goods while, in addition to the comparison behavior log, a context is also taken into account. Note that, in the configuration of the cloud server 12 in FIG. 10, the same reference numerals and the same name are assigned to components having the same functions as components in the cloud server 12 in FIG. 3, and description thereof will be omitted as appropriate.

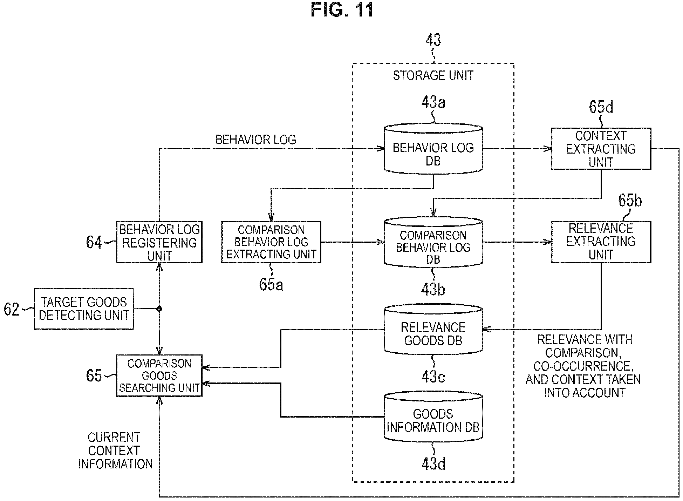

That is, the configuration of the cloud server 12 in FIG. 10 differs from the configuration of the cloud server 12 in FIG. 3 in that the comparison goods searching unit 65 includes a context extracting unit 65d in addition to the comparison behavior log extracting unit 65a and the relevance extracting unit 65b. Further, as illustrated in FIG. 11, the comparison behavior log DB 43b within the storage unit 43 stores information of the context by being added to the comparison behavior log.

That is, as illustrated in FIG. 11, the context extracting unit 65d reads out the behavior log from the behavior log DB 43a, extracts context and causes information of the extracted context to be accumulated in association with the comparison behavior log of the comparison behavior log DB 43b within the storage unit 43.

In this case, the relevance extracting unit 65b extracts goods on the basis of relevance while comparison and co-occurrence of the comparison behavior log and context are taken into account, and registers the extraction result in the relevance goods DB 43c as the search result of the comparison goods.

Note that the context described here indicates a situation when behavior with respect to the target goods occurs, and, for example, indicates a situation such as a location, a store, weather and a period of time, when behavior such as taking the target goods in his/her hand occurs.

For example, it is assumed that there is a comparison behavior log of taking the goods B included in the same category as the goods A which are target goods, in his/her hand, in association with context which specifies a location of Tokyo, and there is a comparison behavior log of taking the goods C included in the same category as the goods A which are target goods, in his/her hand, in association with context which specifies a location of New York.

In this case, when the goods A which are target goods are taken in his/her hand, the relevance extracting unit 65b can switch and extract relevance goods as the comparison goods in accordance with context which specifies a current location. That is, in the case where the current context is information which specifies a location of Tokyo, the relevance extracting unit 65b extracts the good B among the goods in the same category as the comparison goods. On the other hand, in the case where the current context is information which specifies a location of New York, the relevance extracting unit 65b extracts the goods C among the goods in the same category as the comparison goods.

In this manner, it is possible to extract appropriate comparison goods in accordance with a situation when behavior with respect to the target goods is performed.

### <Comparison goods search processing using cloud server in FIG. 10>

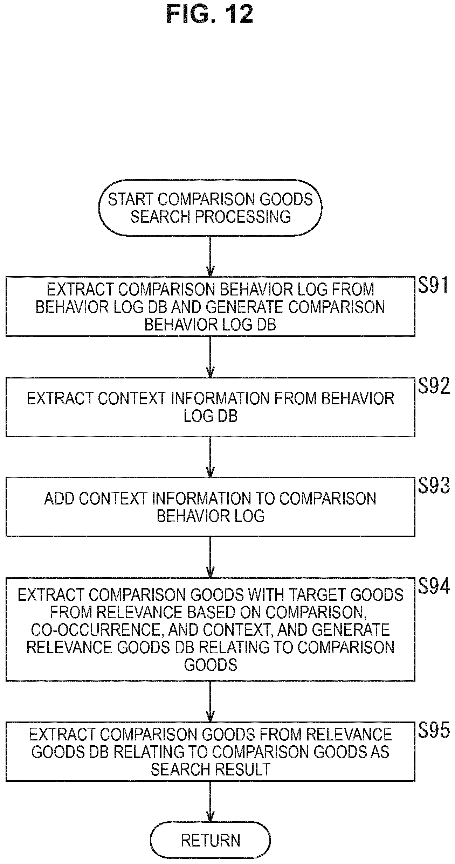

Comparison goods search processing using the cloud server 12 in FIG. 10 will be described here with reference to the flowchart in FIG. 12.

In step S91, the comparison behavior log extracting unit 65a extracts a comparison behavior log which is made behavior when the target goods are compared, from the behavior log DB 43a (FIG. 11) and registers the comparison behavior log in the comparison behavior log DB 43b.

In step S92, the context extracting unit 65d extracts context with respect to the goods from the behavior log DB 43a.

In step S93, the comparison behavior log extracting unit 65a registers the extracted comparison behavior log and the context in the comparison behavior log DB 43b in association with each other. That is, here, the context is registered in association with the comparison behavior log registered in the comparison behavior log DB 43b.

In step S94, the relevance extracting unit 65b extracts the comparison goods with respect to the target goods from relevance based on comparison and co-occurrence and the context and registers the comparison goods in the relevance goods DB 43c. In more detail, the relevance extracting unit 65b extracts the comparison goods with respect to the target goods from relevance based on comparison and co-occurrence of the comparison behavior log to which the context is added.

In step S95, the comparison goods searching unit 65 extracts goods registered in the relevant goods DB 43c as the comparison goods, and reads out goods information corresponding to the goods extracted as the comparison goods from the goods information DB 43d.

According to the above-described processing, it is possible to search for the comparison goods as goods which are relevant on the basis of comparison, co-occurrence, and context in the comparison behavior log relating to the target goods, and extract the searched comparison goods and the goods information thereof.

### <Second embodiment>

### <Configuration example of second embodiment of goods sales supporting system>

An example has been described above where behavior of the visit customer 27 is detected on the basis of an image captured by the imaging unit 22. However, the behavior of the visit customer 27 may be detected from something other than an image if it is possible to detect action such as, for example, the target goods being picked up by the visit customer 27. Therefore, for example, it is also possible to cause action of picking up the target goods to be detected by a wearable terminal worn by the visit customer 27.

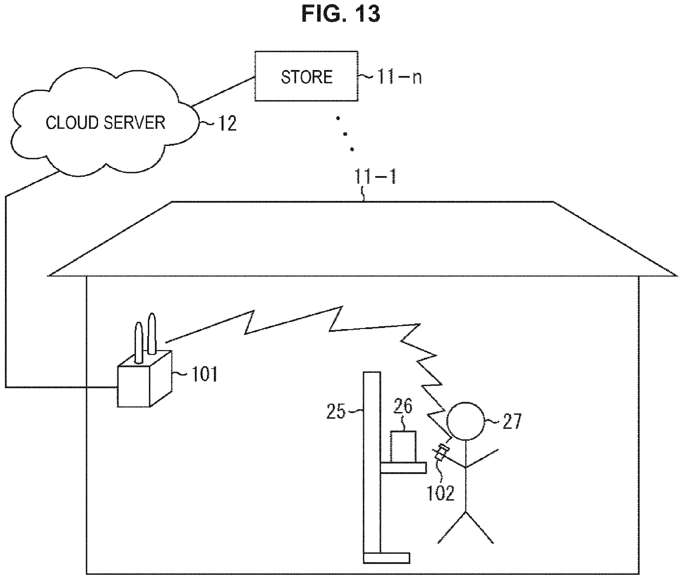

FIG. 13 illustrates a configuration example of a second embodiment of the goods sales supporting system configured to cause action of picking up the target goods to be detected by the wearable terminal. Note that, in the configuration in FIG. 13, the same reference numerals and the same name are assigned to components having the same functions as the components in FIG. 1, and description thereof will be omitted as appropriate.

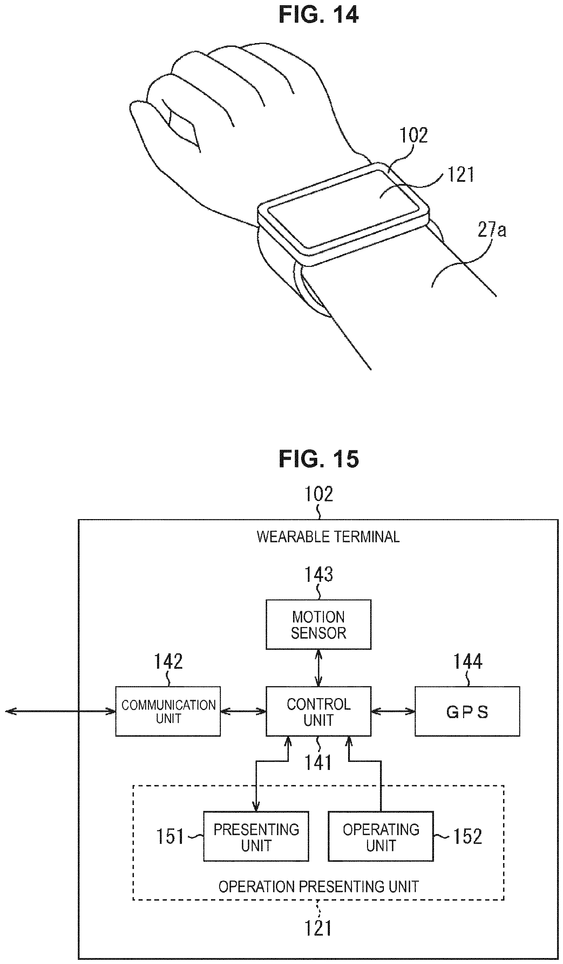

That is, in the goods sales supporting system in FIG. 13, action of the visit customer 27 picking up the goods is detected by, for example, a location and motion (acceleration) of the arm 27a being detected by a wristwatch wearable terminal 102 as illustrated in FIG. 14, and the action is transmitted to the cloud server 12 via the communication unit 101. The cloud server 12 then generates presentation information of goods information of the target goods and the comparison goods on the basis of information of the location and the acceleration, transmits the presentation information to the wearable terminal 102 and causes the operation presenting unit 121 to present the presentation information.

### Configuration example of wearable terminal>

A configuration example of the wearable terminal 102 will be described next with reference to FIG. 15.

The wearable terminal 102 includes a control unit 141, a communication unit 142, a motion sensor 143, a global positioning system (GPS) 144 and an operation presenting unit 121.

The control unit 141 controls the whole operation of the wearable terminal 102.

The communication unit 142 communicates with the cloud server 12 via the communication unit 101 within the store 11 under control by the control unit 141.

The motion sensor 143 measures acceleration in each direction of three dimensions and supplies the acceleration to the control unit 141.

The GPS 144 receives signals from a plurality of satellites which are not illustrated, detects location information including latitude and longitude on earth and outputs the location information to the control unit 141.

The operation presenting unit 121, which includes a presenting unit 151 configured with a display, and an operating unit 152 configured with a touch panel, displays the presentation information transmitted from the cloud server 12 at the presenting unit 151.

That is, the control unit 141 controls the communication unit 142 to transmit the acceleration in each direction of three dimensions detected by the motion sensor 143 and the location information on earth detected by the GPS 144 to the cloud server 12 via the communication unit 101. The control unit 141 then controls the communication unit 142 to receive the presentation information generated by the cloud server 12 on the basis of the acceleration and the location information and displays the presentation information at the presenting unit 151 of the operation presenting unit 121.

### <Configuration example of cloud server in FIG. 13>

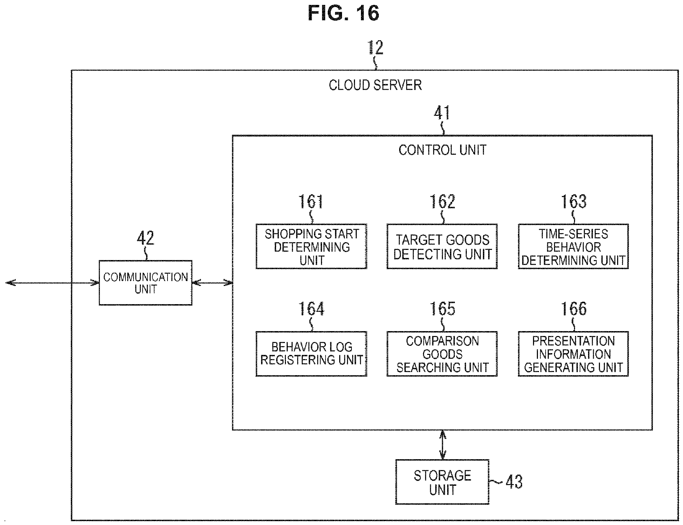

A configuration example of an embodiment of the cloud server 12 in FIG. 13 will be described next with reference to FIG. 16. Note that, in the configuration of the cloud server 12 in FIG. 13, the same reference numerals and the same name are assigned to components having the same functions as the components in the cloud server 12 in FIG. 3 and description thereof will be omitted as appropriate.

That is, the configuration of the cloud server 12 in FIG. 13 differs from the configuration of the cloud server 12 in FIG. 3 in that, in place of the shopping start determining unit 61 to the presentation information generating unit 66, a shopping start determining unit 161 to a presentation information generating unit 166 are provided.

The shopping start determining unit 161 to the presentation information generating unit 166 all basically have functions similar to functions of the shopping start determining unit 61 to the presentation information generating unit 66, except that while the shopping start determining unit 61 to the presentation information generating unit 66 implement respective functions on the basis of the image information and the weight information, the shopping start determining unit 161 to the presentation information generating unit 166 implement similar functions using the location information and the acceleration information. Note that, because the comparison goods searching unit 165 may employ a configuration of the comparison goods searching unit 65 in one of the above-described FIG. 3, FIG. 7 and FIG. 10, description including detailed components will not be provided. That is, components corresponding to the comparison behavior log extracting unit 65a, the relevance extracting unit 65b, the preference extracting unit 65c and the context extracting unit 65d may be provided as necessary.

### <Goods sales supporting processing in goods sales supporting system in FIG. 13>

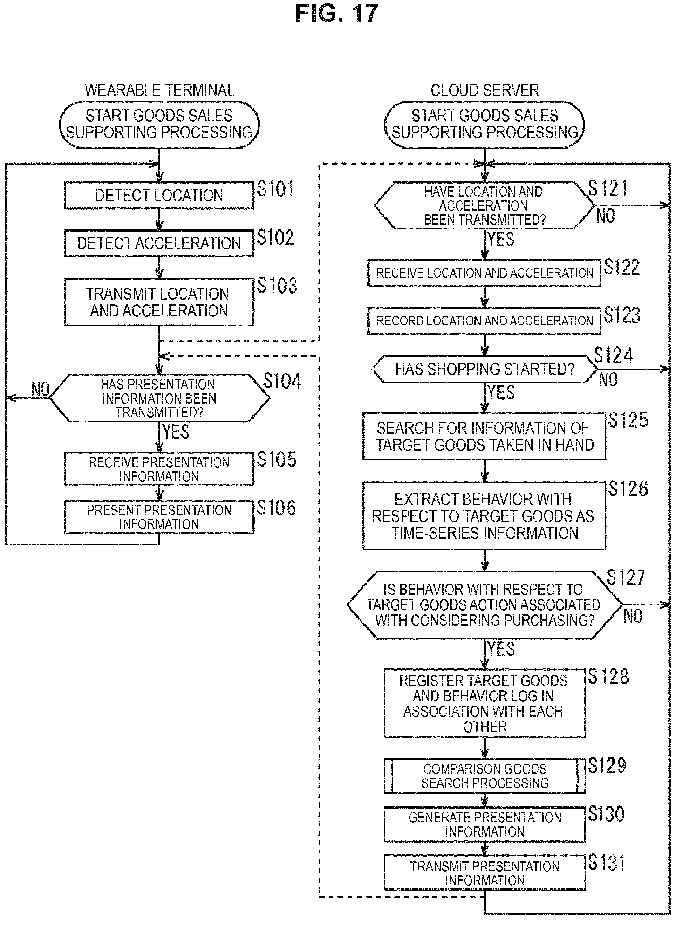

Goods sales supporting system in the goods sales supporting system in FIG. 5 will be described next with reference to the flowchart in FIG. 17.

In step S101, the GPS 144 of the wearable terminal 102 detects location information and outputs the location information to the control unit 141.

In step S102, the motion sensor 143 detects acceleration information in each direction of three dimensions and outputs the acceleration information to the control unit 141.

In step S103, the control unit 141 controls the communication unit 142 to transmit the location information and the acceleration information to the cloud server 12 along with information for identifying the own wearable terminal via the communication unit 101 of the store 11.

In step S121, the control unit 41 of the cloud server 12 controls the communication unit 42 to determine whether or not the location information and the acceleration information have been transmitted from the store 11, and, in the case where it is regarded that the location information and the acceleration information have not been transmitted, the processing repeats the processing in step S71. Then, in step S71, in the case where the location information and the acceleration information have been transmitted from the store 11, the processing proceeds to step S122.

In step S122, the control unit 41 receives the transmitted location information and acceleration information.

In step S123, the control unit 41 causes the transmitted location information and acceleration information to be stored in the storage unit 43 along with receipt time in association with the information for identifying the wearable terminal 102

In step S124, the control unit 41 controls the shopping start determining unit 161 to determine whether or not shopping of goods is started on the basis of the location information and the acceleration information. In step 124, for example, if it is recognized on the basis of the location information and the acceleration information that the visit customer 27 touches the goods 26 with his/her hand at a position where the goods 26 are located and lifts the goods 26 from the store shelf 25 from motion of the hand on the basis of the acceleration information, the shopping start determining unit 61 regards the situation as start of shopping, and the processing proceeds to step S125. Note that, in step S124, in the case where it is regarded that shopping is not started, the processing returns to step S121.

In step S125, the target goods detecting unit 162 regards the goods 26 which the visit customer 27 takes in his/her hand as the target goods and searches for goods information of the target goods. More specifically, the target goods detecting unit 162 may specify a type of the target goods and detect goods information, for example, by storing arrangement for each type of goods in advance in accordance with positions on the store shelf 25 on which the goods 26 specified by the location information and the acceleration information are displayed.

In step S126, the time-series behavior determining unit 163 determines and extracts behavior of the visit customer 27 in chronological order on the basis of the location information and the acceleration information and supplies the behavior to the behavior log registering unit 164. For example, the time-series behavior determining unit 163 determines each type of time-series behavior of touching the goods 26 with the right hand and, after a predetermined time period has elapsed, returning the goods 26 to the store shelf 25 on the basis of the location information and the acceleration information and supplies the determination result to the behavior log registering unit 164.

In step S127, the behavior log registering unit 64 determines whether behavior with respect to the target goods is action associated with considering purchasing. That is, for example, behavior of the visit customer 27 taking the goods 26 with his/her hand and returning the goods 26 to the original position in a very short period of time is not regarded as action associated with considering purchasing. Further, in the case where there are another goods in front of goods which the visit customer originally desires to consider purchasing, behavior of temporarily taking the other goods in front of the goods to move to take the goods which the visit customer desires to consider purchasing with his/her hand is not behavior of considering purchasing, and thus, not regarded as action associated with considering purchasing.

Meanwhile, in the case where behavior of grasping the target goods or picking up the goods 26 from the store shelf 25 and returning the goods 26 is continuously repeated for equal to or longer than a predetermined time period, such behavior is regarded as behavior associated with considering purchasing.

Then, when behavior with respect to the target goods is regarded as action associated with considering purchasing in step S127, in step S128, the behavior log registering unit 164 causes information of the behavior extracted in chronological order to be stored in the storage unit 43 as the behavior log. Note that, in step S127, in the case where the behavior with respect to the target goods is not regarded as action associated with considering purchasing, the processing returns to step S121.

In step S129, the comparison goods searching unit 165 searches for goods information of the comparison goods with respect to the target goods on the basis of the behavior log.

That is, the comparison goods searching unit 165 executes comparison goods search processing and searches for comparison goods from the behavior log with respect to current target goods with reference to the behavior log of the visit customer 27 who takes the target goods in his/her hand, stored in the storage unit 43. Note that, because the comparison goods search processing may be processing in one of the above-described FIG. 6, FIG. 9 and FIG. 12, description thereof will be omitted.

In step S130, the presentation information generating unit 168 generates presentation information which can be presented at (the presenting unit 151 of) the operation presenting unit 121 of the wearable terminal 102 on the basis of goods information of each of the target goods and the comparison goods.

In step S131, the control unit 141 controls the communication unit 42 to transmit the generated presentation information to the store 11.

In step S104, the communication unit 142 determines whether or not the presentation information is transmitted from the cloud server 12 via the communication unit 101 of the store 11, and, in the case where it is regarded that the presentation information is not transmitted, the processing returns to step S101. On the other hand, in the case where the presentation information is transmitted in step S104, the processing proceeds to step S105.

In step S105, the communication unit 142 receives the presentation information transmitted from the cloud server 12.

In step S106, the communication unit 142 supplies the received presentation information to a predetermined operation presenting unit 121 and causes the presentation information to be presented at the presenting unit 151.

According to these series of processing, only by the visit customer 27 wearing the wearable terminal 102 and taking the goods 26 in his/her hand from the store shelf 25, it is possible to acquire goods information of goods which are taken in his/her hand and which are recognized as the target goods and acquire goods information of the comparison goods at the operation presenting unit 121.

As a result, it is possible to acquire goods information of the comparison goods as well as goods information of the target goods, which could be obtained only in shopping on a network previously.

While an example has been described above which uses the location information and the acceleration information as information which can be acquired by the wearable terminal 102 on which the motion sensor 143 and the GPS 144 are mounted, it is also possible to judge behavior of the visit customer 27 with respect to the goods 26 in more detail by acquiring a captured image of the imaging unit 22 provided inside the store 11 in the first embodiment via the communication unit 21 and the communication unit 142 and transmitting the captured image to the cloud server 12 so that image information is utilized in addition to the location information and the acceleration information. Further, the imaging unit may be provided at the wearable terminal 102, and, for example, an imaging unit may be provided at part of the operation display unit 121 corresponding to a clock face in a clock type wearable terminal 102, an image in the vicinity of the store shelf 25 may be captured and behavior of the visit customer 27 with respect to the goods 26 may be judged from the captured image. Still further, the imaging unit 22 may be provided at a location other than the store 11 and the wearable terminal 102 if the imaging unit 22 can capture the image in the vicinity of the store shelf 25.

### <Third embodiment>

### <Configuration example of third embodiment of goods sales supporting system>

While the configuration of the goods sales supporting system using the cloud server 12 and the wearable terminal 102 has been described above, it is also possible to realize the goods sales supporting system (goods sales supporting apparatus) only using the wearable terminal 102 by improving functions of the wearable terminal 102 so that the wearable terminal 102 has functions similar to functions of the cloud server 12.

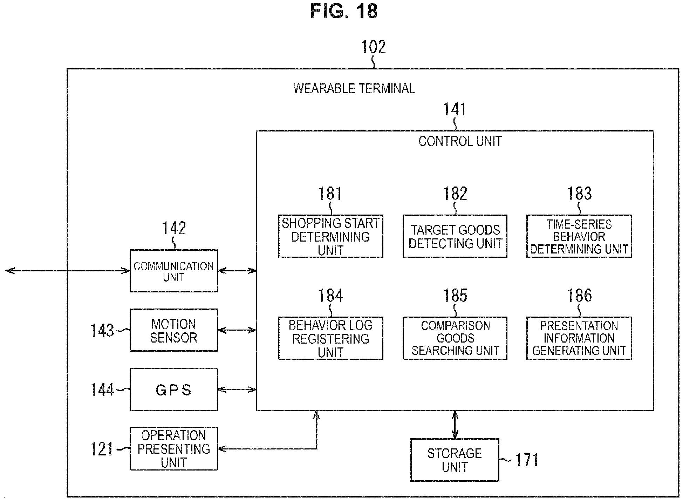

FIG. 18 illustrates a configuration example of the wearable terminal (goods sales supporting apparatus) 102 which further has functions of the cloud server 12. Note that, in the configuration of the wearable terminal 102 in FIG. 18, the same reference numerals and the same name are assigned to components having the same functions as the components of the wearable terminal 102 in FIG. 15, and description thereof will be omitted as appropriate.

That is, the wearable terminal 102 in FIG. 18 differs from the wearable terminal 102 in FIG. 15 in that the control unit 141 has functions substantially the same as functions of the control unit 41 in the cloud server 12 in FIG. 16, and a shopping start determining unit 181 to a presentation information generating unit 186 have the same functions as functions of the shopping start determining unit 161 to the presentation information generating unit 166. Further, a storage unit 171 corresponding to the storage unit 43 is provided.

### <Goods sales supporting processing in goods sales supporting apparatus in FIG. 18>

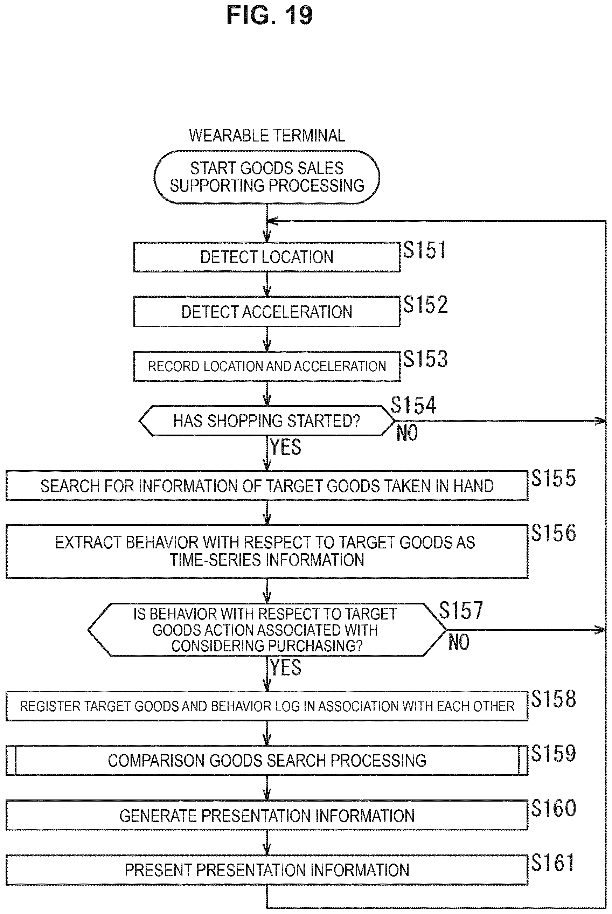

Goods sales supporting processing in the goods sales supporting system (goods sales supporting apparatus) configured with the wearable terminal 102 in FIG. 18 will be described next with reference to the flowchart in FIG. 19.

Note that, because processing in step S151, S152 and S161 in FIG. 19 corresponds to the processing in step S101, S102 and S106 in FIG. 17, and processing from step S153 to S161 in FIG. 19 corresponds to the processing from step S123 to S131 in FIG. 17, description thereof will be omitted.

That is, in this case, the goods sales supporting processing can be realized only by the visit customer 27 wearing the wearable terminal 102 on his/her arm 27a. However, in this case, the wearable terminal 102 needs to control the communication unit 142 to receive delivery of information regarding which goods are displayed at which location inside the store 11 and information of the target goods and the comparison goods in advance from the cloud server 12, or the like, and store the information in the storage unit 171 in advance.

According to these series of processing, only by the visit customer 27 wearing the wearable terminal 102 and taking the goods 26 in his/her hand from the store shelf 25, it is possible to acquire goods information of goods which are taken in his/her hand and which are recognized as the target goods and acquire goods information of the comparison goods at the operation presenting unit 121.

As a result, it is possible to present goods information of the target goods and goods information of the comparison goods of the target goods, which could be obtained only in shopping on a network previously, in real time in actual goods sales.

Note that, while an example has been described above where a wristwatch type wearable terminal 102 is used, the wearable terminal 102 may be other types of terminals, and, for example, may be a spectacle type in which projection is performed on a lens portion to form a presenting unit.

Further, because comparison goods include goods which are not always sold beside the target goods, information for navigating the customer to a place where such goods are being sold may be included in the presentation information for such goods.

Further, while an example has been described where goods which are to be comparison goods are searched for on the basis of the behavior log of the visit customer who takes the target goods in his/her hand, it is, for example, also possible to statistically analyze goods which are to be comparison goods on the basis of behavior logs of other visit customers who take the target goods in their hands and behavior logs of a plurality of visit customers, search for the goods from the analysis result and present the goods.

Further, while an example has been described above where goods information is presented to the visit customer, it is also possible to present comparison information before and after change of display of goods by utilizing the behavior logs of a plurality of visit customers to obtain how much attention is focused on the goods or information of change of display of goods, or the like.

Still further, it is also possible to present the behavior log itself to the visit customer, in which case, it is also possible to present a list of rules to be found, or the like, as an analysis result of the behavior log. By this means, it is possible to look back on, for example, behavior the visit customer always performs before purchasing goods or what kind of goods the visit customer has been interested in while saving trouble of registering his/her behavior himself/herself.

Further, while an example has been described in the present embodiment where behavior of the visit customer taking the goods in his/her hand is regarded as behavior of considering purchasing the goods taken in his/her hand, the behavior of considering purchasing the goods is not limited to such behavior, and may be other behavior if the behavior indicates interest with respect to the goods, and, for example, in the case where it is detected through line of sight detection that the line of sight of the visit customer is directed to the goods for equal to or longer than a predetermined time period, such behavior may be regarded as behavior of considering purchasing.

Further, the above-described first embodiment to third embodiment may coexist within the same store, which makes it possible to make utilization of the goods sales supporting system by the visit customer (user) easier and more flexible.

Further, while an example has been described above which is directed to goods sales support when a visit customer purchases goods, a target item does not have to be goods, and, for example, information associated with a book which a visitor takes in his/her hand may be presented in a library.

### <Example of execution by software>

Incidentally, the above series of processes can, for example, be executed by hardware, or can be executed by software. In the case where the series of processes is executed by software, a program configuring this software is installed in a computer included in dedicated hardware, or a general-purpose personal computer which can execute various functions when various programs are installed, etc., from a recording medium.

FIG. 12 shows an example configuration of a general-purpose personal computer. The computer includes a CPU (Central Processing Unit) 1001. An input/output interface 1005 is connected to the CPU 1001 through a bus 1004. A ROM (Read Only Memory) 1002 and a RAM (Random Access Memory) 1003 are connected to the bus 1004.

An input unit 1006 including an input device, such as a keyboard, a mouse, etc., which is used by the user to input an operation command, an output unit 1007 which outputs a process operation screen or an image of a process result to a display device, a storage unit 1008 including a hard disk drive etc. which stores a program or various items of data, and a communication unit 1009 including a LAN (Local Area Network) adaptor etc. which performs a communication process through a network typified by the Internet, are connected to the input/output interface 1005. Also, connected is a drive 1010 which reads and writes data from and to a removable medium 1011, such as a magnetic disk (including a flexible disk), an optical disk (including a CD-ROM (Compact Disc-Read Only Memory) and a DVD (Digital Versatile Disc)), an magneto-optical disk (including an MD (Mini Disc)), or a semiconductor memory, etc.

The CPU 1001 executes various processes according to a program stored in the ROM 1002 or a program which is read from the removable medium 1011, such as a magnetic disk, an optical disk, a magneto-optical disk, or a semiconductor memory, etc., is installed in the storage unit 1008, and is loaded from the storage unit 1008 to the RAM 1003. The RAM 1003 also stores data which is necessary when the CPU 1001 executes various processes, etc., as appropriate.

In the computer configured as described above, the CPU 1001 loads a program that is stored, for example, in the storage unit 1008 onto the RAM 1003 via the input/output interface 1005 and the bus 1004, and executes the program. Thus, the above-described series of processing is performed.

Programs to be executed by the computer (the CPU 1001) are provided being recorded in the removable medium 1011 which is a packaged medium or the like. Also, programs may be provided via a wired or wireless transmission medium, such as a local area network, the Internet or digital satellite broadcasting.

In the computer, by inserting the removable medium 1011 into the drive 1010, the program can be installed in the storage unit 1008 via the input/output interface 1005. Further, the program can be received by the communication unit 1009 via a wired or wireless transmission medium and installed in the storage unit 1008. Moreover, the program can be installed in advance in the ROM 1002 or the storage unit 1008.

It should be noted that the program executed by a computer may be a program that is processed in time series according to the sequence described in this specification or a program that is processed in parallel or at necessary timing such as upon calling.

Further, in the present disclosure, a system has the meaning of a set of a plurality of configured elements (such as an apparatus or a module (part)), and does not take into account whether or not all the configured elements are in the same casing. Therefore, the system may be either a plurality of apparatuses, stored in separate casings and connected through a network, or a plurality of modules within a single casing.

An embodiment of the disclosure is not limited to the embodiments described above, and various changes and modifications may be made without departing from the scope of the disclosure.

For example, the present disclosure can adopt a configuration of cloud computing which processes by allocating and connecting one function by a plurality of apparatuses through a network.

Further, each step described by the above-mentioned flow charts can be executed by one apparatus or by allocating a plurality of apparatuses.

In addition, in the case where a plurality of processes are included in one step, the plurality of processes included in this one step can be executed by one apparatus or by sharing a plurality of apparatuses.

Additionally, the present technology may also be configured as below.
<1> An information processing apparatus including:
   an item detecting unit configured to detect an item which a user becomes interested in as a target item;
   a behavior detecting unit configured to detect behavior of the user with respect to the target item;
   a comparison item searching unit configured to search for an item to be compared with the target item as a comparison item on a basis of the behavior of the user detected by the behavior detecting unit; and
   a presenting unit configured to present information relating to the comparison item searched for by the comparison item searching unit and information relating to the target item.
<2> The information processing apparatus according to <1>,
   in which the behavior detecting unit detects time-series behavior of the user with respect to the target item.
<3> The information processing apparatus according to <2>,
   in which the item is goods displayed on a store shelf of a store,
   the information processing apparatus further includes an imaging unit configured to capture an image of a circumference of the store shelf, and
   the item detecting unit detects the goods which the user becomes interested in as target goods which are the target item, when it is detected that the user takes the goods in his/her hand on a basis of the image captured by the imaging unit.
<4> The information processing apparatus according to <3>,
   in which the behavior detecting unit detects the time-series behavior of the user with respect to the target item by detecting behavior of the user who takes the target goods in his/her hand in chronological order, and
   the information processing apparatus further includes a storage unit configured to store the detected time-series behavior as a behavior log.
<5> The information processing apparatus according to <3>,
   in which the behavior detecting unit causes behavior only associated with purchasing of goods among the detected time-series behavior to be stored in the storage unit as the behavior log.
<6> The information processing apparatus according to <3>,
   in which the comparison item searching unit searches for target goods which are the target item satisfying a behavior condition to be compared with target goods, as comparison goods which are the comparison item on a basis of the time-series behavior of the user detected by the behavior detecting unit.
<7>The information processing apparatus according to <3>,
   in which the target item detecting unit further searches for goods information of the target goods which are the target item,
   the comparison item searching unit further searches for goods information of the comparison goods which are the comparison item, and
   the information processing apparatus further includes a presentation information generating unit configured to process the goods information of the target goods and the comparison goods to generate presentation information which is information capable of being presented by the presenting unit.
<8> The information processing apparatus according to <3>, further including:
   a goods acquiring unit configured to detect that the goods are taken in a hand from the store shelf,
   in which the item detecting unit detects that the user takes the goods in his/her hand on a basis of the image captured by the imaging unit, and, when it is detected by the goods acquiring unit that the goods are taken in the hand of the user, detects the goods which the user becomes interested in as the target goods which are the target item.
<9> The information processing apparatus according to <8>,
   in which the goods acquiring unit includes a weight sensor configured to detect whether or not the user takes goods put on the store shelf in his/her hand by measuring weight of the store shelf, an infrared sensor configured to perform detection in accordance with whether or not infrared light is blocked by the goods, or a conduction sensor configured to detect change of conduction in accordance with presence or absence of the goods.
<10> The information processing apparatus according to any of <1> to <9>,
   in which the item is goods displayed on a store shelf of a store,
   the information processing apparatus further includes a wearable terminal configured to be worn on an arm of the user and configured to detect location information and acceleration information, and
   the item detecting unit detects the goods which the user becomes interested in as target goods which are the target item, when it is detected that the user takes the goods in his/her hand on a basis of the location information and the acceleration information detected by the wearable terminal.
<11> The information processing apparatus according to <10>,
   in which the wearable terminal is worn on the arm of the user, detects location information and acceleration information, and includes an imaging unit configured to capture an image, and
   the item detecting unit detects the goods which the user becomes interested in as the target goods which are the target item, when it is detected that the user takes the goods in his/her hand on a basis of the location information and the acceleration information detected by the wearable terminal and the image captured by the imaging unit.
<12> The information processing apparatus according to <10>,
   in which the behavior detecting unit detects time-series behavior of the user with respect to the target item by detecting behavior of the user who takes the target goods in his/her hand in chronological order, and
   the information processing apparatus further includes a storage unit configured to store the detected time-series behavior as a behavior log.
<13> The information processing apparatus according to <10>,
   in which the behavior detecting unit causes behavior only associated with purchasing of goods among the detected time-series behavior to be stored in the storage unit as the behavior log.
<14> The information processing apparatus according to <10>,
   in which the comparison item searching unit searches for target goods which are the target item satisfying a behavior condition to be compared with target goods, as comparison goods which are the comparison item on a basis of the time-series behavior of the user detected by the behavior detecting unit.
<15> The information processing apparatus according to <10>,
   in which the target item detecting unit further searches for goods information of target goods which are the target item,
   the comparison item searching unit further searches for goods information of comparison goods which are the comparison item, and
   the information processing apparatus further includes a presentation information generating unit configured to process the goods information of the target goods and the comparison goods to generate presentation information capable of being presented by the presenting unit.
<16> An information processing method including steps of:
   detecting an item which a user becomes interested in as a target item;
   detecting behavior of the user with respect to the target item;
   searching for an item to be compared with the target item as a comparison item on a basis of the detected behavior of the user; and
   presenting information relating to the searched comparison item and information relating to the target item.
<17> A program for causing a computer to function as:
   an item detecting unit configured to detect an item which a user becomes interested in as a target item;
   a behavior detecting unit configured to detect behavior of the user with respect to the target item;
   a comparison item searching unit configured to search for an item to be compared with the target item as a comparison item on a basis of the behavior of the user detected by the behavior detecting unit; and
   a presenting unit configured to present information relating to the comparison item searched for by the comparison item searching unit and information relating to the target item.
<18> A wearable terminal including:
   an item detecting unit configured to detect an item which a user becomes interested in as a target item;
   a behavior detecting unit configured to detect behavior of the user with respect to the target item;
   a comparison item searching unit configured to search for an item to be compared with the target item as a comparison item on a basis of the behavior of the user detected by the behavior detecting unit; and
   a presenting unit configured to present information relating to the comparison item searched for by the comparison item searching unit and information relating to the target item.
<19> An information processing apparatus including:
   a target item detecting unit configured to detect a certain item which a user becomes interested in as a target item;
   a behavior detecting unit configured to detect behavior of the user with respect to the target item; and
   a comparison and considering behavior determining unit configured to determine that comparison and considering behavior is performed among a plurality of items on a basis of time-series behavior history information of the user detected by the behavior detecting unit.
<20> An information processing apparatus including:
   a target item detecting unit configured to detect a certain item which a user becomes interested in as a target item;
   a behavior detecting unit configured to detect behavior of the user with respect to the target item;
   a comparison and considering behavior determining unit configured to determine that comparison and considering behavior is performed among a plurality of items on a basis of time-series behavior history information of the user detected by the behavior detecting unit; and
   a comparison and considering behavior history database in which history information of the comparison and considering behavior is recorded;
   a comparison and considering behavior history analyzing unit configured to analyze relevance information among items from the history information of the comparison and considering behavior recorded in the comparison and considering behavior history database; and
   an item relevance information database in which item relevance information using an analysis result of the comparison and considering behavior history analyzing unit is recorded.
<21> An information processing apparatus including:
   a target item detecting unit configured to detect a certain item which a user becomes interested in as a target item;
   a behavior detecting unit configured to detect behavior of the user with respect to the target item;
   a comparison and considering behavior determining unit configured to determine that comparison and considering behavior is performed among a plurality of items on a basis of time-series behavior history information of the user detected by the behavior detecting unit; and
   a comparison and considering behavior history database in which history information of the comparison and considering behavior is recorded;
   a comparison and considering behavior history analyzing unit configured to analyze relevance information among items from the history information of the comparison and considering behavior recorded in the comparison and considering behavior history database;
   an item relevance information database in which item relevance information using an analysis result of the comparison and considering behavior history analyzing unit is recorded; and
   a relevance item recommendation information processing unit including a function of returning an item with high relevance obtained from the item relevance information database with respect to the certain item.
<22> An information processing apparatus including:
   a target item detecting unit configured to detect a certain item which a user becomes interested in as a target item;
   a behavior detecting unit configured to detect behavior of the user with respect to the target item;
   a comparison and considering behavior determining unit configured to determine that comparison and considering behavior is performed among a plurality of items on a basis of time-series behavior history information of the user detected by the behavior detecting unit; and
   a comparison and considering behavior history database in which history information of the comparison and considering behavior is recorded;
   a comparison and considering behavior history analyzing unit configured to analyze relevance information among items from the history information of the comparison and considering behavior recorded in the comparison and considering behavior history database;
   an item relevance information database in which item relevance information using an analysis result of the comparison and considering behavior history analyzing unit is recorded;
   a relevance item recommendation information processing unit including a function of returning an item with high relevance obtained from the item relevance information database with respect to the certain item; and
   an information presenting unit configured to present to the user an item with high relevance obtained at the relevance item recommendation information processing unit for the target item, detected at the target item detecting unit.
<23> The information processing apparatus according to any of <19> to <22>,
   in which the behavior detecting unit regards behavior of the user taking an item in his/her hand as one type of behavior of the user with respect to the target item and detects the behavior as behavior of the user with respect to the target item.
<24> A program for causing a computer to function as:
   a target item detecting unit configured to detect a certain item which a user becomes interested in as a target item;
   a behavior detecting unit configured to detect behavior of the user with respect to the target item; and
   a comparison and considering behavior determining unit configured to determine that comparison and considering behavior is performed among a plurality of items on a basis of time-series behavior history information of the user detected by the behavior detecting unit.
<25> A program for causing a computer to function as:
   a target item detecting unit configured to detect a certain item which a user becomes interested in as a target item;
   a behavior detecting unit configured to detect behavior of the user with respect to the target item;
   a comparison and considering behavior determining unit configured to determine that comparison and considering behavior is performed among a plurality of items on a basis of time-series behavior history information of the user detected by the behavior detecting unit; and
   a comparison and considering behavior history database in which history information of the comparison and considering behavior is recorded;
   a comparison and considering behavior history analyzing unit configured to analyze relevance information among items from the history information of the comparison and considering behavior recorded in the comparison and considering behavior history database; and
   an item relevance information database in which item relevance information using an analysis result of the comparison and considering behavior history analyzing unit is recorded.
<26> A program for causing a computer to function as:
   a target item detecting unit configured to detect a certain item which a user becomes interested in as a target item;
   a behavior detecting unit configured to detect behavior of the user with respect to the target item;
   a comparison and considering behavior determining unit configured to determine that comparison and considering behavior is performed among a plurality of items on a basis of time-series behavior history information of the user detected by the behavior detecting unit; and
   a comparison and considering behavior history database in which history information of the comparison and considering behavior is recorded;
   a comparison and considering behavior history analyzing unit configured to analyze relevance information among items from the history information of the comparison and considering behavior recorded in the comparison and considering behavior history database;
   an item relevance information database in which item relevance information using an analysis result of the comparison and considering behavior history analyzing unit is recorded; and
   a relevance item recommendation information processing unit including a function of returning an item with high relevance obtained from the item relevance information database with respect to the certain item.
<27> A program for causing a computer to function as:
   a target item detecting unit configured to detect a certain item which a user becomes interested in as a target item;
   a behavior detecting unit configured to detect behavior of the user with respect to the target item;
   a comparison and considering behavior determining unit configured to determine that comparison and considering behavior is performed among a plurality of items on a basis of time-series behavior history information of the user detected by the behavior detecting unit; and
   a comparison and considering behavior history database in which history information of the comparison and considering behavior is recorded;
   a comparison and considering behavior history analyzing unit configured to analyze relevance information among items from the history information of the comparison and considering behavior recorded in the comparison and considering behavior history database;
   an item relevance information database in which item relevance information using an analysis result of the comparison and considering behavior history analyzing unit is recorded;
   a relevance item recommendation information processing unit including a function of returning an item with high relevance obtained from the item relevance information database with respect to the certain item; and
   an information presenting unit configured to present to the user an item with high relevance obtained at the relevance item recommendation information processing unit for the target item, detected at the target item detecting unit.
<28> The program according to any of <24> to <27>,
   in which the behavior detecting unit regards behavior of the user taking an item in his/her hand as one type of behavior of the user with respect to the target item and detects the behavior as behavior of the user with respect to the target item.

### Reference Signs List

- 11: store
- 12: cloud server
- 21: communication unit
- 22, 22-1 to 22-n: imaging unit
- 23, 23-1 to 23-n: presenting unit
- 24, 24-1 to 24-n: weight sensor
- 25: store shelf
- 26: goods
- 27: visit customer
- 41: control unit
- 42: communication unit
- 43: storage unit
- 61: shopping start determining unit
- 62: target goods detecting unit
- 63: time-series behavior determining unit
- 64: behavior log registering unit
- 65: comparison goods searching unit
- 66: presentation information generating unit
- 101: communication unit
- 102: wearable terminal
- 121: operation presenting unit
- 141: control unit
- 142: communication unit
- 143: motion sensor
- 144: control unit
- 161: shopping start determining unit
- 162: target goods detecting unit
- 163: time-series behavior determining unit
- 164: behavior log registering unit
- 165: comparison goods searching unit
- 166: presentation information generating unit
- 181: shopping start determining unit
- 182: target goods detecting unit
- 183: time-series behavior determining unit
- 184: behavior log registering unit
- 185: comparison goods searching unit
- 186: presentation information generating unit

## Claims

1. An information processing apparatus comprising:
an item detecting unit configured to detect an item which a user becomes interested in as a target item;
a behavior detecting unit configured to detect behavior of the user with respect to the target item;
a comparison item searching unit configured to search for an item to be compared with the target item as a comparison item on a basis of the behavior of the user detected by the behavior detecting unit; and
a presenting unit configured to present information relating to the comparison item searched for by the comparison item searching unit and information relating to the target item.

2. The information processing apparatus according to claim 1,
wherein the behavior detecting unit detects time-series behavior of the user with respect to the target item, and
the comparison item searching unit searches for the item to be compared with the target item as the comparison item on a basis of the time-series behavior of the user detected by the behavior detecting unit.

3. The information processing apparatus according to claim 2,
wherein the item is goods displayed on a store shelf of a store,
the information processing apparatus further includes an imaging unit configured to capture an image of a circumference of the store shelf, and
the item detecting unit detects the goods which the user becomes interested in as target goods which are the target item, when it is detected that the user takes the goods in his/her hand on a basis of the image captured by the imaging unit.

4. The information processing apparatus according to claim 3,
wherein the behavior detecting unit detects the time-series behavior of the user with respect to the target item by detecting behavior of the user who takes the target goods in his/her hand in chronological order, and
the information processing apparatus further includes a storage unit configured to store the detected time-series behavior as a behavior log.

5. The information processing apparatus according to claim 3,
wherein the behavior detecting unit causes behavior only associated with purchasing of goods among the detected time-series behavior to be stored in the storage unit as the behavior log.

6. The information processing apparatus according to claim 3,
wherein the comparison item searching unit searches for target goods which are the target item satisfying a behavior condition to be compared with target goods, as comparison goods which are the comparison item on a basis of the time-series behavior of the user detected by the behavior detecting unit.

7. The information processing apparatus according to claim 3,
wherein the target item detecting unit further searches for goods information of the target goods which are the target item,
the comparison item searching unit further searches for goods information of the comparison goods which are the comparison item, and
the information processing apparatus further includes a presentation information generating unit configured to process the goods information of the target goods and the comparison goods to generate presentation information which is information capable of being presented by the presenting unit.

8. The information processing apparatus according to claim 3, further comprising:
a goods acquiring unit configured to detect that the goods are taken in a hand from the store shelf,
wherein the item detecting unit detects that the user takes the goods in his/her hand on a basis of the image captured by the imaging unit, and, when it is detected by the goods acquiring unit that the goods are taken in the hand of the user, detects the goods which the user becomes interested in as the target goods which are the target item.

9. The information processing apparatus according to claim 8,
wherein the goods acquiring unit includes a weight sensor configured to detect whether or not the user takes goods put on the store shelf in his/her hand by measuring weight of the store shelf, an infrared sensor configured to perform detection in accordance with whether or not infrared light is blocked by the goods, or a conduction sensor configured to detect change of conduction in accordance with presence or absence of the goods.

10. The information processing apparatus according to claim 1,
wherein the item is goods displayed on a store shelf of a store,
the information processing apparatus further includes a wearable terminal configured to be worn on an arm of the user and configured to detect location information and acceleration information, and
the item detecting unit detects the goods which the user becomes interested in as target goods which are the target item, when it is detected that the user takes the goods in his/her hand on a basis of the location information and the acceleration information detected by the wearable terminal.

11. The information processing apparatus according to claim 10,
wherein the wearable terminal is worn on the arm of the user, detects location information and acceleration information, and includes an imaging unit configured to capture an image, and
the item detecting unit detects the goods which the user becomes interested in as the target goods which are the target item, when it is detected that the user takes the goods in his/her hand on a basis of the location information and the acceleration information detected by the wearable terminal and the image captured by the imaging unit.

12. The information processing apparatus according to claim 10,
wherein the behavior detecting unit detects time-series behavior of the user with respect to the target item by detecting behavior of the user who takes the target goods in his/her hand in chronological order, and
the information processing apparatus further includes a storage unit configured to store the detected time-series behavior as a behavior log.

13. The information processing apparatus according to claim 10,
wherein the behavior detecting unit causes behavior only associated with purchasing of goods among the detected time-series behavior to be stored in the storage unit as the behavior log.

14. The information processing apparatus according to claim 10,
wherein the comparison item searching unit searches for target goods which are the target item satisfying a behavior condition to be compared with target goods, as comparison goods which are the comparison item on a basis of the time-series behavior of the user detected by the behavior detecting unit.

15. The information processing apparatus according to claim 10,
wherein the target item detecting unit further searches for goods information of target goods which are the target item,
the comparison item searching unit further searches for goods information of comparison goods which are the comparison item, and
the information processing apparatus further includes a presentation information generating unit configured to process the goods information of the target goods and the comparison goods to generate presentation information capable of being presented by the presenting unit.

16. An information processing method comprising steps of:
detecting an item which a user becomes interested in as a target item;
detecting behavior of the user with respect to the target item;
searching for an item to be compared with the target item as a comparison item on a basis of the detected behavior of the user; and
presenting information relating to the searched comparison item and information relating to the target item.

17. A program for causing a computer to function as:
an item detecting unit configured to detect an item which a user becomes interested in as a target item;
a behavior detecting unit configured to detect behavior of the user with respect to the target item;
a comparison item searching unit configured to search for an item to be compared with the target item as a comparison item on a basis of the behavior of the user detected by the behavior detecting unit; and
a presenting unit configured to present information relating to the comparison item searched for by the comparison item searching unit and information relating to the target item.

18. A wearable terminal comprising:
an item detecting unit configured to detect an item which a user becomes interested in as a target item;
a behavior detecting unit configured to detect behavior of the user with respect to the target item;
a comparison item searching unit configured to search for an item to be compared with the target item as a comparison item on a basis of the behavior of the user detected by the behavior detecting unit; and
a presenting unit configured to present information relating to the comparison item searched for by the comparison item searching unit and information relating to the target item.
